# FASCICULE DE BREVET EUROPEEN

(11) **EP 3 130 537 B1**
(45) Date de publication et mention de la délivrance du brevet: **12.06.2019**
(21) Numéro de dépôt: 16180081.8
(22) Date de dépôt: 19.07.2016
(51) Int. Cl.: B64C 27/51, B64C 27/635, F16F 13/06

(54) **DISPOSITIF D'AMORTISSEMENT, ET AERONEF**
DÄMPFUNGSVORRICHTUNG UND LUFTFAHRZEUG
A DAMPER DEVICE AND AN AIRCRAFT

(30) Priorité: 14.08.2015 FR 1501736
(43) Date de publication de la demande: 15.02.2017
(73) Titulaire: Airbus Helicopters, 13725 Marignane Cedex (FR)
(72) Inventeur: SEQUERA, Damien, 30900 NIMES (FR); JALAGUIER, Jean-Pierre, 13127 VITROLLES (FR); GREGORCZYK, Wojciech, 91-341 LODZ (PL)
(74) Mandataire: GPI & Associés

(56) Documents cités:
- EP-A1- 2 678 222
- WO-A1-2010/129322
- FR-A1- 2 592 696
- US-A1- 2012 141 276

## Description

La présente invention a pour objet un dispositif d'amortissement, et un aéronef comprenant au moins un amortisseur de traînée de ce type.

L'invention se rapporte au domaine technique général de l'amortissement des mouvements d'un système mécanique et plus particulièrement des équipements comportant des systèmes d'amortissement utilisés dans l'aéronautique.

L'invention trouve son application dans tout système amortisseur et tout particulièrement dans des amortisseurs de traînée utilisés sur un rotor de sustentation de giravion, et notamment d'un hélicoptère. L'invention se situe dès lors dans le domaine technique restreint des amortisseurs de traînée.

Sur un rotor d'hélicoptère, un dispositif d'amortissement peut relier chaque pale au moyeu du rotor ou peut relier deux pales consécutives entre elles. Un tel dispositif d'amortissement est notamment connu sous l'expression « amortisseur de traînée ».

En effet, la superposition du mouvement de battement des pales et le mouvement rotatif des pales autour de l'axe de rotation du rotor induit l'apparition d'une force de Coriolis, à savoir d'une force périodique qui fait osciller les pales dans leur plan de rotation. Par suite, un dispositif d'amortissement lié à une pale d'un rotor de giravion permet en premier lieu d'amortir les oscillations de la pale lors de son mouvement en traînée. La raideur propre du dispositif d'amortissement limite ainsi l'amplitude du mouvement de la pale en traînée en vol.

Un tel dispositif d'amortissement vise en second lieu à au moins limiter les risques d'apparition de phénomènes de résonance connus sous les expressions « résonance sol » et « résonance air ».

En conséquence, un dispositif d'amortissement présente une raideur dimensionnée pour que la fréquence propre des pales d'un rotor lors d'un mouvement en traînée soit appropriée afin de satisfaire les exigences dimensionnelles requises pour un fonctionnement optimal du rotor par exemple au regard du phénomène de résonance sol. De plus, un dispositif d'amortissement est aussi dimensionné pour amortir les mouvements des pales en traînée afin de limiter les risques d'une entrée en résonance sol lorsque que la fréquence propre en axes fixes des pales du rotor lors d'un mouvement en traînée est égale à une fréquence d'excitation du fuselage de l'aéronef posé sur son train d'atterrissage.

De même, l'amortissement apporté par un dispositif d'amortissement vise à lutter contre le phénomène de résonance air.

Pour générer une loi d'amortissement adéquate, il est connu d'utiliser des dispositifs amortisseurs particuliers. Ces dispositifs amortisseurs sont basés en général sur une loi caractéristique d'un effort en fonction du débattement dynamique du dispositif d'amortissement. Cette loi présente trois plages distinctes d'amortissement dépendant de la sollicitation dynamique en déplacement à laquelle l'amortisseur de traînée est soumis.

Une telle loi est appelée loi de type « triple pente ». En effet, la loi présente un premier tronçon correspondant au fonctionnement requis pour lutter contre le phénomène de résonance sol, un deuxième tronçon correspondant au fonctionnement requis en vol, et un troisième tronçon pour lutter contre le phénomène de résonance air.

Dans ce contexte, un dispositif d'amortissement connu présente uniquement des organes élastiques, tels que des ressorts.

Un autre dispositif d'amortissement connu présente uniquement un système hydraulique.

Un autre type de dispositif d'amortissement est un amortisseur dit « mixte ». Un dispositif d'amortissement mixte est muni d'une part d'un système hydraulique et d'autre part d'un organe élastique.

Le document FR 2950027 présente un dispositif d'amortissement comprenant plusieurs blocs d'élastomère.

Le document CN 102501970 décrit aussi un système muni d'une pluralité de blocs d'élastomère.

Un dispositif d'amortissement mixte connu est muni d'un système hydraulique et d'un organe élastique agencé en parallèle entre deux organes de liaison.

Un premier organe de liaison est solidaire d'une armature dite « armature intermédiaire ». L'armature intermédiaire comporte un anneau portant un piston.

Un deuxième organe de liaison est solidaire d'une armature dite « armature centrale » et d'une armature dite « armature externe » qui sont disposées radialement de part et d'autre de l'armature intermédiaire. Un bloc annulaire en élastomère de l'organe élastique est solidaire de l'armature intermédiaire et de l'armature externe. A l'inverse, des chambres hydrauliques d'un système hydraulique sont délimitées par l'armature intermédiaire et l'armature centrale.

Un déplacement relatif du premier organe de liaison par rapport au deuxième organe de liaison induit alors une sollicitation conjointe de l'organe élastique et du système hydraulique.

Néanmoins, la maintenance d'un tel dispositif d'amortissement mixte peut s'avérer délicate. Par exemple, le démontage complet du dispositif d'amortissement peut être nécessaire pour remplacer l'organe élastique en raison du lien physique existant entre l'organe élastique et le système hydraulique. La défaillance de l'organe élastique conduit alors à des actions de maintenance onéreuses. Or, les organes élastiques notamment en élastomère peuvent avoir une durée de vie limitée.

Le document FR 2592696 décrit un dispositif d'amortissement de ce type.

Le document US 2013/0164131 décrit aussi un dispositif d'amortissement de ce type. Un premier anneau en élastomère s'étend radialement entre une armature intermédiaire et une armature centrale, et un deuxième anneau en élastomère s'étend radialement entre une armature intermédiaire et une armature externe.

Le document EP 2678222 décrit un dispositif d'amortissement muni d'un premier organe de liaison solidaire d'un système hydraulique. Un deuxième organe de liaison est solidaire d'une armature, un organe élastique étant interposé entre l'armature et le système hydraulique. L'organe de liaison et le système hydraulique fonctionnent en série suite à un déplacement du premier organe de liaison par rapport au deuxième organe de liaison, à savoir l'un après l'autre.

Les documents WO 2012/148389 et WO 2013/152300, US 2012/0141276, WO 2010/129322 sont aussi connus.

Le document US 2012/0141276 décrit un dispositif d'amortissement muni d'un organe élastique délimitant partiellement une chambre hydraulique.

La présente invention a alors pour objet de proposer un dispositif d'amortissement muni d'un organe élastique et d'un système hydraulique fonctionnant en parallèle visant à faciliter des opérations de maintenance.

Selon l'invention, un dispositif d'amortissement est muni d'un premier organe de liaison et d'un deuxième organe de liaison qui sont aptes à relier le dispositif d'amortissement respectivement à un premier organe mécanique et à un deuxième organe mécanique, ce dispositif d'amortissement comportant un organe élastique et un système hydraulique qui sont interposés entre le premier organe de liaison et le deuxième organe de liaison.

Le système hydraulique comporte un carter extérieur logeant un fluide hydraulique, le système hydraulique comportant une tige mobile en translation par rapport au carter extérieur étanche, ledit fluide hydraulique du dispositif d'amortissement étant uniquement contenu dans ledit système hydraulique en dehors d'un cas de fuite du système hydraulique, la tige s'étendant longitudinalement d'une première extrémité vers une deuxième extrémité le long d'un axe longitudinal, la tige ayant une partie saillante qui saille longitudinalement du carter extérieur, le premier organe de liaison étant fixé de manière réversible au carter extérieur pour être solidaire en translation du carter extérieur. L'organe élastique est disposé autour de la partie saillante de la tige, l'organe élastique comportant au moins un moyen élastique interposé entre une première armature et une deuxième armature, l'organe élastique ainsi que le système hydraulique étant deux modules distincts, ledit premier organe de liaison étant fixé de manière réversible au carter extérieur pour être solidaire en translation du carter extérieur, la première armature étant fixée de manière réversible au carter extérieur pour être solidaire en translation du carter extérieur, la deuxième armature est solidaire en translation de la partie saillante, le deuxième organe élastique étant fixé de manière réversible à la partie saillante.

Par exemple, au moins un organe de liaison comporte une chape ou encore une articulation à rotule. Ce dispositif d'amortissement peut être un amortisseur de traînée interposé entre deux pales d'un rotor, ou encore entre une pale et un moyeu d'un rotor.

Par ailleurs, le dispositif d'amortissement présente une architecture modulaire. En effet, le premier organe de liaison, le système hydraulique, l'organe élastique et le deuxième organe de liaison peuvent représenter des modules fabriqués séparément. Dès lors, le premier organe de liaison est fixé de manière réversible au carter extérieur du système hydraulique par des moyens usuels, tel qu'un moyen de vissage. Le carter extérieur est de plus fixé de manière réversible à l'organe élastique du système hydraulique par des moyens usuels, tel qu'un moyen de vissage. Enfin, le deuxième organe de liaison est fixé à la tige du système hydraulique.

Le dispositif d'amortissement présente alors un système hydraulique et un organe élastique qui fonctionnent en parallèle. Un déplacement du premier organe de liaison provoque en effet un déplacement du carter extérieur et de la première armature par rapport à la tige du système hydraulique. Ce déplacement du carter extérieur et de la première armature induit une sollicitation du fluide hydraulique et du moyen élastique.

A l'inverse, un déplacement du deuxième organe de liaison provoque un déplacement de la tige du système hydraulique par rapport au carter extérieur et à la première armature.

En outre, l'architecture modulaire du dispositif d'amortissement permet de démonter un module sans ouvrir le système hydraulique ce qui permet d'optimiser les actions de maintenance. En particulier, l'organe élastique peut être démonté sans ouvrir le système hydraulique. Le moyen élastique n'étant pas directement lié au système hydraulique, cette architecture permet d'accéder facilement à l'organe élastique.

Il convient de noter que cette architecture modulaire est novatrice en ce sens que notamment le module relatif au système hydraulique et le module relatif à l'organe élastique forment deux ensembles distincts, contrairement à l'enseignement de l'art antérieur et aux préjugés concernant les risques de séparation de ces deux ensembles sous des fortes sollicitations à hautes fréquences.

Le dispositif d'amortissement peut de plus comporter une ou plusieurs des caractéristiques qui suivent.

Dès lors, la tige peut comprendre une partie saillante saillant longitudinalement d'un premier côté du carter extérieur, ledit dispositif d'amortissement comprenant un premier espace fermé traversé par la partie saillante et agencé entre le carter extérieur et l'organe élastique, ledit premier espace étant hydrauliquement isolé dudit système hydraulique en l'absence de fuite du système hydraulique.

Eventuellement, la tige peut comprendre une partie saillante saillant longitudinalement d'un premier côté du carter extérieur et une portion saillante saillant longitudinalement d'un deuxième côté du carter extérieur, ledit dispositif d'amortissement comprenant un premier espace fermé traversé par la partie saillante et agencé entre le carter extérieur et l'organe élastique, la portion saillante évoluant dans un deuxième espace fermé agencé entre le carter extérieur et une paroi interne du premier organe de liaison.

Le déplacement de la tige par rapport au carter extérieur peut induire une fuite du fluide hydraulique en dehors du carter extérieur, même en présence d'un joint dynamique. Toutefois, le fluide hydraulique s'échappe alors vers un espace qui est fermé soit par l'organe élastique soit par le premier organe de liaison. La fuite n'est alors pas visible de l'extérieur. L'utilisation d'un moyen de drainage n'est alors pas nécessaire.

Eventuellement, le dispositif d'amortissement peut néanmoins comprendre un système surveillance pour évaluer la quantité de fluide hydraulique présent dans le carter extérieur.

Le système surveillance peut prendre la forme d'un moyen électronique mesurant une pression qui est relié à un moyen d'alerte ou de stockage de données. L'information de pression mesurée permet de déterminer la présence éventuelle d'une fuite du fluide hydraulique. En particulier, la pression régnant dans une chambre de compensation peut être évaluée.

Le système surveillance peut prendre la forme d'un moyen visuel tel qu'une jauge mécanique ou une indication particulière. La jauge mécanique peut permettre de visualiser un déplacement d'un piston mobile délimitant une chambre de compensation.

Par ailleurs, la première armature peut porter des ailettes s'étendant radialement.

La conception modulaire du dispositif d'amortissement permet l'agencement d'ailettes sur la première armature. Ces ailettes permettent d'optimiser une surface d'échange de chaleur entre l'organe élastique et l'air extérieur afin d'optimiser le refroidissement de cet organe élastique.

A ce titre, des ailettes peuvent également équiper le module du système hydraulique.

En outre, le système hydraulique peut comporter un piston délimitant longitudinalement deux chambres hydrauliques au sein d'un espace interne agencé dans le carter extérieur.

Ce piston est favorablement porté par la tige.

Un déplacement relatif de la tige et du carter extérieur induit un déplacement du fluide hydraulique provoquant de l'amortissement par laminage au travers d'orifices.

En particulier, au moins un orifice calibré peut être ménagé dans le piston pour laminer le fluide hydraulique d'une chambre hydraulique vers l'autre chambre hydraulique lorsque le piston se déplace.

Eventuellement, les chambres hydrauliques comprennent des sections identiques, chaque section représentant une coupe d'une chambre hydraulique dans un plan perpendiculaire à l'axe longitudinal.

Cette caractéristique permet d'engendrer des variations de volumes opposées dans les chambres hydrauliques lors d'un déplacement du piston. En effet, quand le fluide hydraulique remplit une chambre d'une certaine quantité, l'autre chambre se vide de la même quantité.

Par ailleurs, les chambres hydrauliques peuvent communiquer hydrauliquement avec deux clapets écrêteurs, un clapet écrêteur dit « clapet écrêteur de compression » et un clapet écrêteur « clapet écrêteur de traction » laminant ledit fluide hydraulique d'une chambre hydraulique vers l'autre chambre hydraulique à partir d'une amplitude de déplacement déterminée du piston.

L'utilisation de clapets écrêteurs permet d'obtenir un dispositif d'amortissement présentant une pluralité de pentes.

Durant une première phase de fonctionnement au sol, le fluide hydraulique traverse les orifices calibrés du piston. Le dispositif d'amortissement met alors en oeuvre un premier tronçon d'une loi d'amortissement présentant une première pente. Ce mode de fonctionnement est utile pour lutter contre le phénomène de résonance sol.

Durant une deuxième phase de fonctionnement en vol, un clapet écrêteur s'ouvre. Le fluide hydraulique est alors laminé au travers de ce clapet écrêteur et au travers des orifices calibrés du piston. Par suite, le dispositif d'amortissement met alors en oeuvre un deuxième tronçon présentant une deuxième pente de la loi d'amortissement.

Lorsque le clapet écrêteur ouvert atteint une butée, le dispositif d'amortissement met alors en oeuvre un troisième tronçon présentant une troisième pente de la loi d'amortissement. Ce mode de fonctionnement est utile pour lutter contre le phénomène de résonance air.

Par ailleurs, le système hydraulique peut comporter une chambre de compensation en relation avec lesdites chambres hydrauliques, la chambre de compensation étant délimitée par un bouchon mobile en translation qui coopère avec un système élastique.

Un tel bouchon est usuellement dénommé « piston de compensation ». Le terme « bouchon » est toutefois utilisé par la suite pour ne pas créer de confusion avec le piston séparant les chambres hydrauliques.

La chambre de compensation communique hydrauliquement avec les chambres hydrauliques pour compenser les variations de volume du fluide hydraulique en fonction de la température. En fonction de ces variations de volume, le bouchon se déplace pour adapter le volume de la chambre de compensation.

Selon une première variante, la chambre de compensation et ledit bouchon sont logés au sein de la tige, chaque chambre hydraulique étant en communication fluidique avec la chambre de compensation par un orifice de passage ménagé dans ladite tige.

Selon une deuxième variante, la chambre de compensation et le bouchon sont logés dans une portion du carter extérieur agencée dans une cavité interne du premier organe de liaison

La chambre de compensation est en communication fluidique avec chaque chambre hydraulique directement et/ou via la tige.

Par ailleurs, selon une première alternative, le moyen élastique comporte au moins un ressort.

Selon une deuxième alternative, le moyen élastique comporte au moins un anneau pourvu d'une matière élastique du groupe comprenant des élastomères.

Chaque alternative peut être combinée avec la première variante ou la deuxième variante décrite précédemment.

En outre, la deuxième armature peut comporter une saillie radiale qui est coincée longitudinalement entre une butée longitudinale de la tige et une extrémité longitudinale dudit deuxième organe de liaison.

Par suite, la deuxième armature est alors solidaire en translation de la tige du système hydraulique et du deuxième organe de liaison.

Eventuellement, un organe de mobilité en translation et en rotation est agencé entre la saillie radiale de la deuxième armature et la tige pour autoriser notamment une translation axiale, mais accessoirement une rotation très modérée relative de la tige par rapport à l'organe élastique autour dudit axe longitudinal.

L'organe de mobilité peut par exemple comprendre un organe de type palier constitué par exemple des bagues assurant le guidage axial de la tige.

Par ailleurs selon une première version de l'invention, le deuxième organe de liaison peut comporter un écrou vissé à la tige.

Selon une deuxième version, le deuxième organe de liaison comporte un filetage male/femelle vissé respectivement à un filetage femelle/male de ladite partie saillante, ladite tige ayant un orifice d'immobilisation en rotation apte à coopérer avec un outil pour immobiliser ladite tige en rotation autour dudit axe longitudinal.

Chaque version peut être combinée avec la première variante ou la deuxième variante, et la première ou la deuxième alternative décrites précédemment.

Outre un dispositif d'amortissement, l'invention vise un aéronef comportant un tel dispositif d'amortissement.

L'invention et ses avantages apparaîtront avec plus de détails dans le cadre de la description qui suit avec des exemples donnés à titre illustratif en référence aux figures annexées qui représentent :
- la figure 1, une vue illustrant un aéronef selon l'invention,
- la figure 2, une vue illustrant un dispositif d'amortissement muni d'un organe de liaison vissé à un filetage d'une tige, d'une chambre de compensation agencée au sein d'une cavité du premier organe de liaison, et d'un moyen élastique comprenant un bloc d'élastomère,
- les figures 3 et 4, deux vues illustrant un dispositif d'amortissement muni d'un organe de liaison muni d'un écrou, d'une chambre de compensation agencée au sein d'une cavité du premier organe de liaison, et d'un moyen élastique comprenant un bloc d'élastomère,
- la figure 5, une vue illustrant un dispositif d'amortissement muni d'un organe de liaison muni d'un écrou, d'une chambre de compensation agencée au sein d'une tige, et d'un moyen élastique comprenant un bloc d'élastomère,
- la figure 6, une vue illustrant un dispositif d'amortissement muni d'un organe de liaison muni d'un écrou, d'une chambre de compensation agencée au sein d'une cavité du premier organe de liaison, et d'un moyen élastique comprenant un ressort, et
- la figure 7, une vue illustrant un dispositif d'amortissement muni d'un organe de liaison muni d'un écrou, d'une chambre de compensation agencée au sein d'une cavité du premier organe de liaison, d'un moyen élastique comprenant un bloc d'élastomère, et d'un système hydraulique muni d'ailettes ainsi que de clapets écrêteurs logés dans la tige du système.

Les éléments présents dans plusieurs figures distinctes sont affectés d'une seule et même référence.

Trois directions X, Y et Z orthogonales les unes par rapport aux autres sont représentées sur certaines figures.

La première direction X est dite longitudinale. Le terme « longitudinal » est relatif à une direction parallèle à cette première direction.

Une deuxième direction Y est dite transversale. Enfin, une troisième direction Z est dite d'élévation. Le terme « radialement » fait référence à une direction présente dans un plan perpendiculaire à la deuxième direction et à la troisième direction.

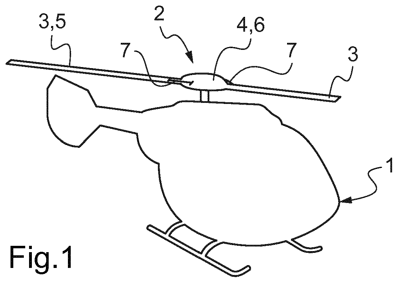

La figure 1 présente un aéronef 1 selon l'invention. Cet aéronef est muni d'au moins un dispositif d'amortissement 7. Chaque dispositif d'amortissement 7 est interposé entre un premier organe mécanique 5 et un deuxième organe mécanique 6.

En particulier, l'aéronef 1 peut comporter un rotor 2 muni d'une pluralité de pales 3. Chaque pale 3 peut être portée par un moyeu 4.

Dès lors, un dispositif d'amortissement 7 peut être relié à un premier organe mécanique 5 prenant la forme d'une pale 3. De plus, ce dispositif d'amortissement peut être relié à un deuxième organe mécanique 6 prenant la forme du moyeu 4 selon la figure 1, ou encore à un deuxième organe mécanique 6 prenant la forme d'une pale adjacente.

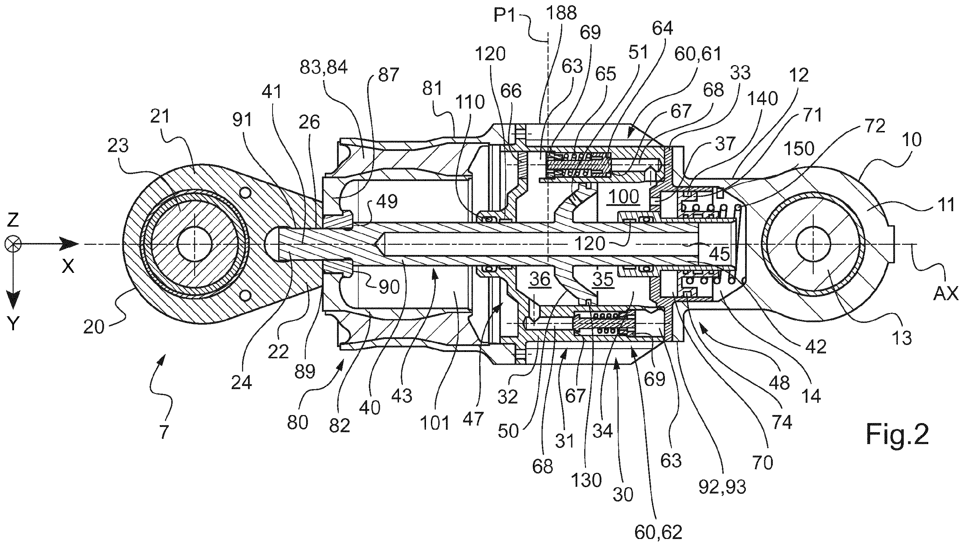

Les figures 2 à 7 illustrent diverses réalisations du dispositif d'amortissement 7.

Indépendamment de la réalisation et en référence à la figure 2, le dispositif d'amortissement 7 comporte quatre modules pouvant être fabriqués séparément.

Un premier module comporte un premier organe de liaison 10 apte à être relié à un organe mécanique. Ce premier organe de liaison 10 est muni d'une tête dite « première tête 11 » prolongée par un pied dit « premier pied 12 ». La première tête 11 porte un moyen de liaison 13 à un organe mécanique, tel qu'une rotule par exemple. En outre, le premier pied 12 peut présenter une forme creuse pour délimiter une cavité interne 14. De plus, le premier pied 12 s'étend longitudinalement de la première tête 11 vers une extrémité 92 apte à être liée de manière réversible à un deuxième module. Par exemple, cette extrémité 92 est munie d'une collerette 93 pouvant être vissée au deuxième module.

Ce deuxième module comporte un système hydraulique 30. Ce système hydraulique 30 comporte une enveloppe dite « carter extérieur 31 » étanche. Ce carter extérieur 31 délimite en son sein des volumes remplis par un fluide hydraulique 100.

Le carter extérieur 31 est fixé de manière réversible au premier organe de liaison 10. Par exemple, la collerette 93 est vissée à une excroissance du carter extérieur.

Par ailleurs, le carter extérieur s'étend longitudinalement d'un premier côté 47 vers un deuxième côté 48 qui est en regard du premier organe de liaison 10.

Ce carter extérieur peut de plus comporter un contenant 32 qui est fermé par au moins un capot 33 et un obturateur 66. Par exemple, le premier organe de liaison est alors vissé à une saillie du capot.

De plus, le système hydraulique est pourvu d'une tige 40 creuse. La tige 40 s'étend longitudinalement d'une première extrémité 41 vers une deuxième extrémité 42 selon l'axe longitudinal AX.

La tige 40 pénètre dans le carter extérieur et est mobile en translation par rapport à ce carter extérieur.

Dès lors, la première extrémité 41 fait partie d'une partie saillante 43 de la tige 40 qui saille longitudinalement en dehors du carter extérieur à partir du premier coté 47.

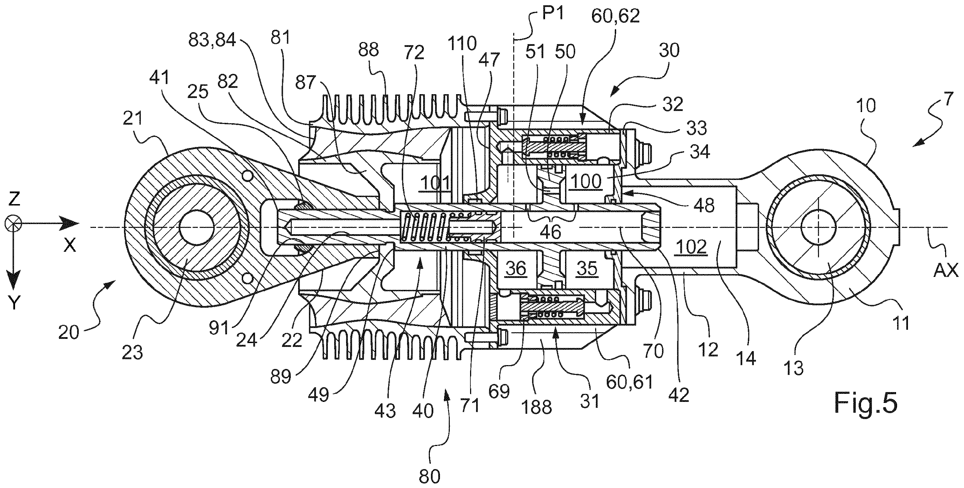

Selon les réalisations des figures 2-4, et 6, la deuxième extrémité est logée à l'intérieur du carter extérieur. Par contre et en référence à la figure 5, la deuxième extrémité peut saillir du deuxième côté 48 du carter extérieur 31 en s'étendant dans la cavité interne 14 du premier organe de liaison.

Des joints dynamiques 110 peuvent être agencés entre le carter extérieur 31 et la tige 40 pour éviter une fuite du fluide hydraulique en dehors du carter extérieur.

De même et en référence à la figure 2, des moyens de guidage 120 de type paliers peuvent être agencés entre le carter extérieur 31 et la tige 40 pour guider cette tige et reprendre les efforts radiaux c'est-à-dire selon la direction transversale Y.

Par ailleurs, le système hydraulique 30 comporte un piston 50 disposé dans un espace interne 34 du carter extérieur 31. En particulier, le piston peut être porté par la tige 40.

Cet espace interne peut être délimité conjointement par le contenant 32, un capot 33 et la tige 40. Dès lors, un joint dynamique 130 peut être agencé entre le piston et les parois du contenant délimitant l'espace interne.

Le piston 50 délimite alors longitudinalement deux chambres hydrauliques 35, 36 au sein de l'espace interne 34. Une chambre hydraulique est dite « première chambre hydraulique 35 », le volume de cette première chambre hydraulique étant réduit lorsque le dispositif d'amortissement est comprimé. L'autre chambre hydraulique est dite « deuxième chambre hydraulique 36 », le volume de cette deuxième chambre hydraulique étant réduit lorsque le dispositif d'amortissement est étiré.

En outre, au moins un orifice calibré 51 est ménagé dans le piston 50 pour mettre en communication fluidique la première chambre hydraulique 35 avec la deuxième chambre hydraulique 36.

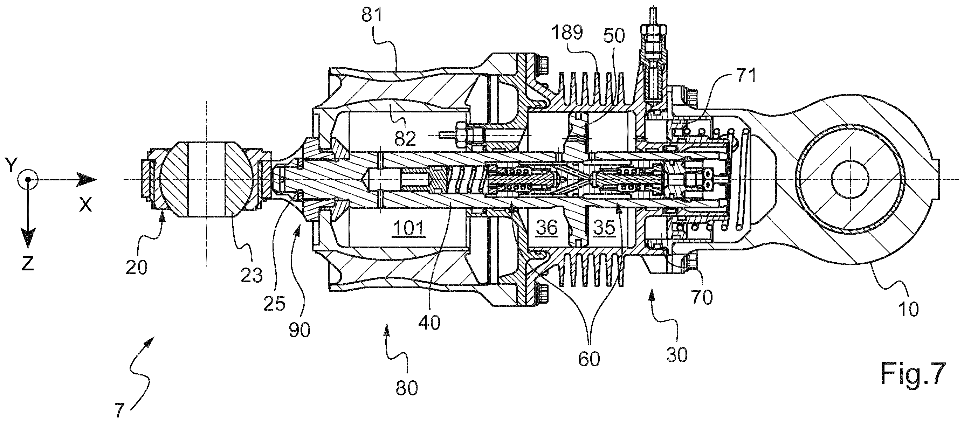

Pour pallier à des risques de cavitation, la première chambre hydraulique et la deuxième chambre hydraulique peuvent être reliées hydrauliquement à la chambre de compensation 70 par le biais d'un clapet antiretour non représenté ou équivalent. De même, un piston anti-cavitation peut être agencé dans le système, par exemple au sein de la tige 40 selon la figure 7.

Eventuellement et en référence à la figure 2, la tige est une tige traversante qui traverse de part en part la première chambre hydraulique 35 et la deuxième chambre hydraulique 36.

Dès lors, les chambres hydrauliques 35, 36 peuvent comprendre des sections identiques, chaque section représentant une coupe d'une chambre hydraulique 35, 36 dans un plan P1 perpendiculaire à l'axe longitudinal AX.

Par ailleurs, le système hydraulique 30 comporte deux clapets écrêteurs 60 agencés au sein du carter extérieur. Un clapet écrêteur 60 est dit « clapet écrêteur de compression 61 », et un clapet écrêteur est dit « clapet écrêteur de traction 62 ».

Chaque clapet écrêteur 60 est logé dans une chambre du carter extérieur dite « chambre d'écrêtage 63 » par commodité. Une chambre d'écrêtage 63 est délimitée par le contenant 32 et le capot 33, l'autre chambre d'écrêtage 63 étant délimitée par le contenant 32 et l'obturateur 66.

Chaque chambre d'écrêtage 63 communique en outre hydrauliquement avec la première chambre hydraulique 35 et la deuxième chambre hydraulique 36.

En outre, chaque clapet écrêteur 60 comprend un moyen d'obturation 64 de type piston qui coopère avec un ressort 65. Le ressort 65 exerce un effort sur le moyen d'obturation 64 pour fermer le clapet écrêteur 60. Le ressort tend en effet à plaquer le moyen d'obturation 64 contre un siège 67 du carter extérieur pour obturer une restriction 68 de la chambre d'écrêtage 63.

De plus, lors de l'ouverture du clapet écrêteur 60, la course du moyen d'obturation peut être limitée par une butée d'écrêtage 69. La butée d'écrêtage 69 comporte un passage présentant une surface de passage différente de la surface de passage de la restriction 68.

Par ailleurs, le système hydraulique 30 peut comporter une chambre de compensation 70.

La chambre de compensation est notamment délimitée par un bouchon 71 mobile en translation qui coopère avec un système élastique 72. Ce système élastique peut prendre la forme d'un ressort. En outre, le bouchon peut prendre la forme d'un piston de compensation.

Selon la réalisation de la figure 5, la chambre de compensation 70 et le bouchon 71 sont logés dans la tige 40. La première chambre hydraulique 35 et la deuxième chambre hydraulique 36 sont alors en communication fluidique avec la chambre de compensation 70 ménagée dans la tige 40 par un orifice de passage 46.

En référence à la figure 2, la chambre de compensation 70 et le bouchon 71 peuvent de façon alternative être logés dans une portion 74 du carter extérieur 31 qui est agencée dans la cavité interne 14 du premier organe de liaison 10.

Selon les figures 2, 3 et 6, cette portion 74 présente un cylindre solidaire du capot 33. Le bouchon 71 coulisse alors le long de la portion 74, un joint dynamique 140 étant interposé entre le bouchon 71 et cette portion 74.

Dès lors, le système élastique s'étend en dehors de la chambre de compensation entre le bouchon 71 et le premier organe de liaison 10. La chambre de compensation est éventuellement agencée entre le bouchon 71 et le capot 33. Cette chambre de compensation 70 communique avec l'espace interne 34 via un orifice 37.

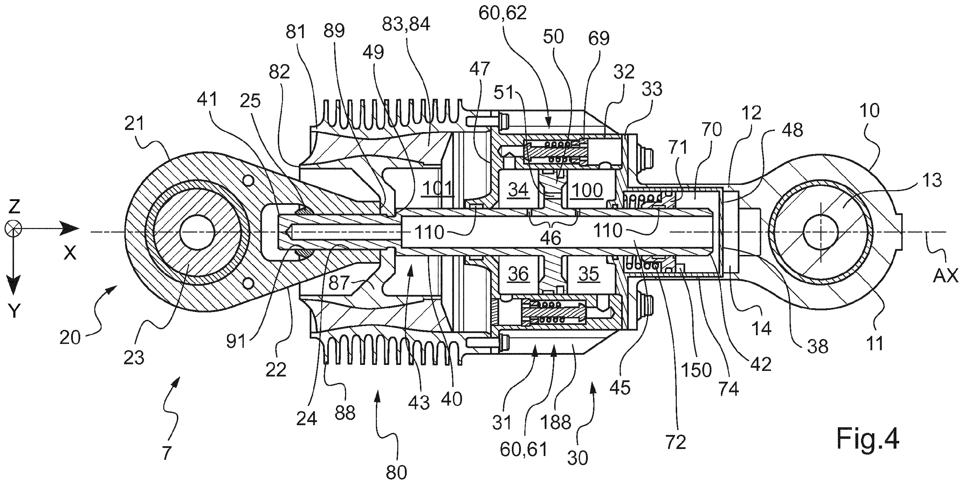

Selon la figure 4, cette portion 74 prend la forme d'une pièce de retenue 38 en forme de U fixée au capot 33. Le bouchon 71 coulisse alors le long de la pièce de retenue 38, un joint dynamique non référencé étant interposé entre le bouchon 71 et cette pièce de retenue 38.

Dès lors, le système élastique s'étend en dehors de la chambre de compensation entre le bouchon 71 et le capot 33.

Par ailleurs et indépendamment de la réalisation, le dispositif d'amortissement 7 peut comprendre un système surveillance 150 pour évaluer la quantité de fluide hydraulique 100 présente dans le carter extérieur 31.

Le système surveillance peut être un moyen électronique ou peut prendre la forme d'une jauge mécanique. Par exemple, une telle jauge peut comprendre un doigt coopérant avec le bouchon 71 pour fournir une indication visuelle sur la quantité de fluide hydraulique contenue dans ledit dispositif d'amortissement. Ce moyen visuel n'est pas exclusif. En effet, il peut correspondre, par exemple, à concevoir une fenêtre de visualisation ménagée dans le premier module relatif au premier organe de liaison 10 pour observer des repères en couleur effectués sur le bouchon 71. Ainsi, lors d'une fuite hydraulique, un repère vert est remplacé par un repère rouge suite au déplacement du bouchon 71 vers le système hydraulique 30 sous l'action du ressort 72.

Par ailleurs, un troisième module comporte un organe élastique 80 qui entoure la tige 40 et en particulier sa partie saillante 43.

Cet organe élastique 80 est muni d'un moyen élastique 83 interposé radialement entre une première armature 81 et une deuxième armature 82.

La première armature est alors fixée de manière réversible au carter extérieur 31 du système hydraulique 30. Par exemple, la première armature est vissée au contenant 32.

La première armature 81 et la deuxième armature 82 peuvent présenter une symétrie de révolution par rapport à l'axe longitudinal AX. Par exemple, la première armature 81 comprend un cylindre entourant un cylindre de la deuxième armature 82, le moyen élastique 83 étant fixé à chaque cylindre.

Selon l'alternative des figures 2 à 5, le moyen élastique peut comporter au moins un anneau 84. Cet anneau comporte un bloc de matière élastique, telle que de l'élastomère. Eventuellement, le moyen élastique peut comporter plusieurs anneaux 84 agencés l'un autour de l'autre ou l'un après l'autre selon l'axe longitudinal AX.

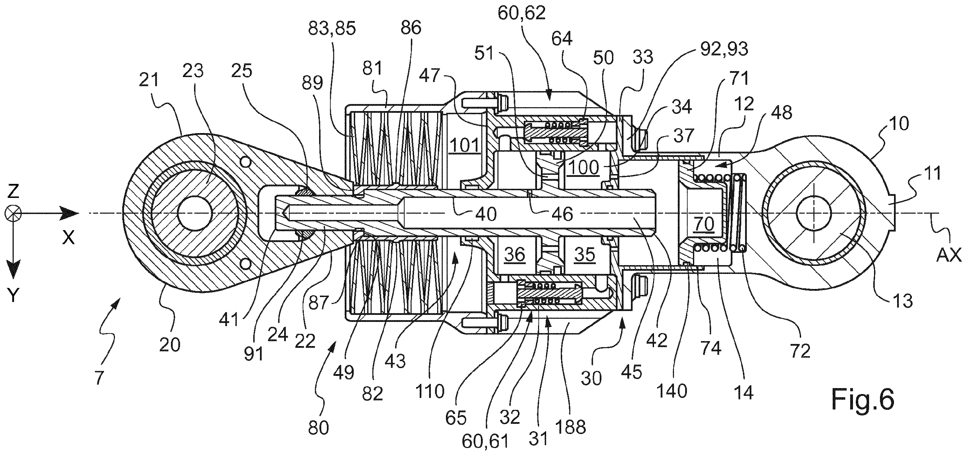

Selon l'alternative de la figure 6, le moyen élastique peut comporter au moins un ressort 85. Par exemple, le moyen élastique peut comporter deux ressorts 85 agencés longitudinalement de part et d'autre d'un épaulement 86 de la deuxième armature.

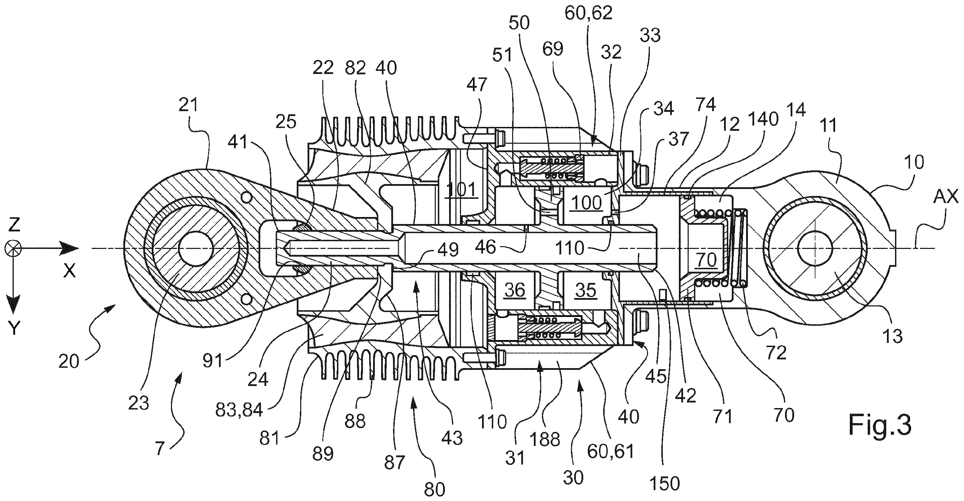

Par ailleurs et en référence aux figures 3 à 5, la première armature peut porter des ailettes 88. Chaque ailette 88 s'étend radialement à partir de la première armature selon une direction opposée au moyen élastique.

A ce propos, le deuxième module relatif au système hydraulique 30 peut aussi comporter également des ailettes de refroidissement soit longitudinales 188 selon les figures 2 à 6, soit radiales 189 selon la figure 7.

En outre et en référence aux figures 3 à 5, la deuxième armature 82 peut comporter une saillie radiale 87 qui s'étend vers l'axe longitudinal AX pour coopérer avec un quatrième module et la tige 40. La saillie radiale 87 peut prendre la forme d'un anneau. Dès lors, la saillie radiale 87 est coincée longitudinalement entre une butée longitudinale 49 de la tige 40 et une extrémité longitudinale 89 dudit quatrième module.

Eventuellement et en référence à la figure 2, une bague frettée 90 est agencée entre la saillie radiale 87 et la tige 40.

En outre, un organe de liaison non représenté de type palier peut être agencé entre la saillie radiale 87 et la tige 40.

Par ailleurs, le quatrième module prend la forme d'un deuxième organe de liaison 20 apte à être relié à un organe mécanique. Ce deuxième organe de liaison 20 est muni d'une tête dite « deuxième tête 21 » prolongée par un pied dit « deuxième pied 22 ». Le deuxième pied 22 s'étend longitudinalement de la deuxième tête 21 vers une extrémité dite « extrémité longitudinale 89 ».

De plus, La deuxième tête 21 porte un moyen de liaison 23 à un organe mécanique, tel qu'une rotule par exemple.

En outre, le deuxième pied 22 peut présenter un orifice longitudinal 24 apte à être traversé par la tige 40, à savoir un orifice s'étendant le long d'un axe longitudinal AX du dispositif d'amortissement.

Selon la version de la figure 2, le deuxième pied 22 présente un filetage 26 autour de cet orifice longitudinal 24. Ce filetage 26 du deuxième organe de liaison 20 est vissé à un filetage 91 de la partie saillante 43 de la tige 40. A cet effet, la tige 40 peut avoir un orifice d'immobilisation en rotation 45 apte à coopérer avec un outil pour immobiliser la tige 40 en rotation autour de l'axe longitudinal AX.

Selon la version des figures 3 à 6, le deuxième pied est muni d'un écrou 25 vissé à la partie saillante 43 de la tige 40.

Par ailleurs et en référence à la figure 2, le dispositif d'amortissement comporte un espace fermé dans lequel débouche la tige 40 en saillant du carter extérieur.

Ainsi, la partie saillante 43 sort longitudinalement du premier côté 47 pour déboucher dans un premier espace 101 fermé agencé entre le carter extérieur 31 et l'organe élastique 80.

Eventuellement et en référence à la figure 5, la tige 40 comporte une portion saillante qui sort longitudinalement du deuxième côté 48. La portion saillante débouche dans un deuxième espace 102 fermé qui est agencé entre le carter extérieur 31 et le premier organe de liaison 10.

Le fonctionnement du dispositif d'amortissement est explicité en référence à la figure 2.

Lors de la sollicitation en traction ou en compression du dispositif d'amortissement 7, un des organes de liaison 10, 20 s'éloigne ou se rapproche de l'autre organe de liaison 20, 10. Ce déplacement relatif des organes de liaison 10, 20 induit la sollicitation simultanée de l'organe élastique et du système hydraulique.

Lors de la sollicitation en traction du dispositif d'amortissement 7, le piston 50 comprime la deuxième chambre hydraulique 36.

Le fluide hydraulique contenu dans la deuxième chambre hydraulique 36 est laminé en étant déplacé vers la première chambre hydraulique 35 au travers de chaque orifice calibré 51. Le laminage du fluide produit un amortissement générant une première pente dans une loi d'amortissement du dispositif d'amortissement.

Tant que la pression régnant dans la deuxième chambre hydraulique 36 est inférieure à la pression exercée par le ressort du clapet écrêteur de traction 62, ce clapet écrêteur de traction 62 reste fermé. Le fluide hydraulique ne traverse aucune chambre d'écrêtage.

Le clapet écrêteur de traction 62 s'ouvre lorsque la pression régnant dans la deuxième chambre hydraulique 36 est supérieure à la pression exercée par le ressort du clapet écrêteur de traction 62. Le moyen d'obturation de ce clapet écrêteur de traction 62 se déplace et n'obture plus la restriction 68 associée.

Le fluide hydraulique contenu dans la deuxième chambre hydraulique 36 est laminé en étant déplacé vers la première chambre hydraulique 35 au travers de chaque orifice calibré 51, et au travers du clapet écrêteur de traction 62.

Le laminage du fluide produit un amortissement générant une deuxième pente dans une loi d'amortissement du dispositif d'amortissement. La raideur du ressort du clapet écrêteur de traction 62 permet d'obtenir une deuxième pente plus faible que la première pente.

Si la pression continue d'augmenter, le mouvement translatif du moyen d'obturation 64 est bloqué par la butée 69 de clapet écrêteur. Le laminage du fluide produit un amortissement générant une troisième pente dans une loi d'amortissement du dispositif d'amortissement.

Lors de la sollicitation en compression du dispositif d'amortissement 7, ce dispositif d'amortissement fonctionne de manière similaire en sollicitant le clapet écrêteur de compression 61.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Les figures 2 à 6 présentent diverses réalisations. Néanmoins, d'autres réalisations peuvent notamment découler de l'association des diverses variantes de la chambre de compensation, des diverses alternatives du moyen élastique, et des divers moyens de fixation du deuxième organe de liaison.

## Revendications

1. Dispositif d'amortissement (7) muni d'un premier organe de liaison (10) et d'un deuxième organe de liaison (20) qui sont aptes à relier ledit dispositif d'amortissement (7) respectivement à un premier organe mécanique (5) et à un deuxième organe mécanique (6), ledit dispositif d'amortissement (7) comportant un organe élastique (80) et un système hydraulique (30) qui sont interposés entre le premier organe de liaison (10) et le deuxième organe de liaison (20),
ledit système hydraulique (30) comportant un carter extérieur (31) logeant un fluide hydraulique (100), ledit système hydraulique (30) comportant une tige (40) mobile en translation par rapport audit carter extérieur (31), ladite tige (40) s'étendant longitudinalement d'une première extrémité (41) vers une deuxième extrémité (42) le long d'un axe longitudinal (AX), ladite tige (40) ayant une partie saillante (43) qui saille longitudinalement dudit carter extérieur (31), ledit premier organe de liaison (10) étant fixé de manière réversible au carter extérieur (31) pour être solidaire en translation du carter extérieur (31), ledit organe élastique (80) étant disposé autour de ladite partie saillante (43) de la tige (40), ledit organe élastique (80) comportant au moins un moyen élastique (83) interposé entre une première armature (81) et une deuxième armature (82), ledit premier organe de liaison (10) étant fixé de manière réversible au carter extérieur (31) pour être solidaire en translation du carter extérieur (31), la première armature (81) étant fixée de manière réversible audit carter extérieur (31) pour être solidaire en translation du carter extérieur (31), la deuxième armature (82) étant solidaire en translation de ladite partie saillante (43), ledit deuxième organe élastique (80) étant fixé de manière réversible à ladite partie saillante (43),
**caractérisé en ce que** ledit carter extérieur (31) est étanche, ledit fluide hydraulique étant uniquement contenu dans ledit système hydraulique, et **en ce que** l'organe élastique (80) ainsi que le système hydraulique (30) sont deux modules distincts.

2. Dispositif d'amortissement selon la revendication 1, **caractérisé en ce que** ladite tige (40) comprenant ladite partie saillante (43) saillant longitudinalement d'un premier côté (47) du carter extérieur (31), ledit dispositif d'amortissement (7) comprend un premier espace (101) fermé traversé par la partie saillante (43) et agencé entre le carter extérieur (31) et l'organe élastique (80), ledit premier espace (101) étant hydrauliquement isolé dudit système hydraulique en l'absence de fuite du système hydraulique.

3. Dispositif d'amortissement selon l'une quelconque des revendications 1 à 2,
**caractérisé en ce que** ledit dispositif d'amortissement (7) comprend un système surveillance (150) pour évaluer la quantité de fluide hydraulique (100) présente dans le carter extérieur (31).

4. Dispositif d'amortissement selon l'une quelconque des revendications 1 à 3,
**caractérisé en ce que** ladite première armature (81) porte des ailettes (88) s'étendant radialement.

5. Dispositif d'amortissement selon l'une quelconque des revendications 1 à 4,
**caractérisé en ce que** ledit système hydraulique (30) comporte un piston (50) délimitant longitudinalement deux chambres hydrauliques (35, 36) au sein d'un espace interne (34) agencé dans le carter extérieur (31).

6. Dispositif d'amortissement selon la revendication 5, **caractérisé en ce que** lesdites chambres hydrauliques (35, 36) comprennent des sections identiques, chaque section représentant une coupe d'une chambre hydraulique (35, 36) dans un plan (P1) perpendiculaire à l'axe longitudinal (AX).

7. Dispositif d'amortissement selon l'une quelconque des revendications 5 à 6,
**caractérisé en ce que** lesdites chambres hydrauliques (35, 36) communiquent hydrauliquement avec deux clapets écrêteurs (60), un clapet écrêteur dit « clapet écrêteur de compression (61) » et un clapet écrêteur « clapet écrêteur de traction (62) » laminant ledit fluide hydraulique d'une chambre hydraulique (35, 36) vers l'autre chambre hydraulique (36, 35) à partir d'une amplitude de déplacement déterminée du piston (50).

8. Dispositif d'amortissement selon l'une quelconque des revendications 5 à 7,
**caractérisé en ce qu'**au moins un orifice calibré (51) est ménagé dans le piston (50) pour laminer le fluide hydraulique (100) d'une chambre hydraulique (35, 36) vers l'autre chambre hydraulique (36, 35) lorsque le piston (50) se déplace.

9. Dispositif d'amortissement selon l'une quelconque des revendications 5 à 8,
**caractérisé en ce que** ledit système hydraulique (30) comporte une chambre de compensation (70) en relation avec lesdites chambres hydrauliques (35, 36), la chambre de compensation (70) étant délimitée par un bouchon (71) mobile en translation qui coopère avec un système élastique (72).

10. Dispositif d'amortissement selon la revendication 9, **caractérisé en ce que** ladite chambre de compensation (70) et ledit bouchon (71) sont logés au sein de ladite tige (40), chaque chambre hydraulique (35, 36) étant en communication fluidique avec un volume de compensation (73) par un orifice de passage (46) ménagé dans ladite tige (40), le volume de compensation (73) étant séparé de la chambre de compensation (70) par le bouchon (71).

11. Dispositif d'amortissement selon la revendication 9,
**caractérisé en ce que** ladite chambre de compensation (70) et ledit bouchon (71) sont logés dans une portion (74) du carter extérieur (31) agencée dans une cavité interne (14) du premier organe de liaison (10).

12. Dispositif d'amortissement selon l'une quelconque des revendications 1 à 11,
**caractérisé en ce que** ledit moyen élastique (83) comporte au moins un ressort (85).

13. Dispositif d'amortissement selon l'une quelconque des revendications 1 à 12,
**caractérisé en ce que** ledit moyen élastique (83) comporte au moins un anneau (84) pourvu d'une matière élastique du groupe comprenant des élastomères.

14. Dispositif d'amortissement selon l'une quelconque des revendications 1 à 13,
**caractérisé en ce que** ladite deuxième armature (82) comporte une saillie radiale (87) qui est coincée longitudinalement entre une butée longitudinale (49) de ladite tige (40) et une extrémité longitudinale (89) dudit deuxième organe de liaison (20).

15. Dispositif d'amortissement selon la revendication 14,
**caractérisé en ce qu'**un organe de mobilité en rotation est agencé entre ladite saillie radiale (87) et ladite tige (40) pour autoriser une rotation relative de la tige (40) par rapport audit organe élastique (80) autour dudit axe longitudinal (AX).

16. Dispositif d'amortissement selon l'une quelconque des revendications 1 à 15,
**caractérisé en ce que** ledit deuxième organe de liaison (20) comporte un écrou (25) vissé à ladite tige (40).

17. Dispositif d'amortissement selon l'une quelconque des revendications 1 à 16,
**caractérisé en ce que** ledit deuxième organe de liaison (20) comporte un filetage (26) vissé à un filetage (91) de ladite partie saillante (43), ladite tige (40) ayant un orifice d'immobilisation en rotation (45) apte à coopérer avec un outil pour immobiliser ladite tige (40) en rotation autour dudit axe longitudinal (AX).

18. Aéronef (1),
**caractérisé en ce que** ledit aéronef (1) comporte au moins un dispositif d'amortissement (7) selon l'une quelconque des revendications 1 à 17.

## Patentansprüche

1. Dämpfungsvorrichtung (7), die mit einem ersten Verbindungselement (10) und einem zweiten Verbindungselement (20) versehen ist, die geeignet sind, die Dämpfungsvorrichtung (7) jeweils mit einem ersten mechanischen Element (5) und einem zweiten mechanischen Element (6) zu verbinden,
wobei die Dämpfungsvorrichtung (7) ein elastisches Element (80) und ein Hydrauliksystem (30) umfasst, die zwischen dem ersten Verbindungselement (10) und dem zweiten Verbindungselement (20) angeordnet sind,
wobei das Hydrauliksystem (30) ein Außengehäuse (31) aufweist, das ein Hydraulikfluid (100) aufnimmt,
das Hydrauliksystem (30) eine Stange (40) aufweist, die in Bezug auf das Außengehäuse (31) translatorisch beweglich ist, wobei sich die Stange (40) longitudinal von einem ersten Ende (41) zu einem zweiten Ende (42) entlang einer Längsachse (AX) erstreckt, wobei die Stange (40) einen vorstehenden Abschnitt (43) aufweist, der longitudinal aus dem Außengehäuse (31) vorsteht, wobei das erste Verbindungselement (10) reversibel an dem Außengehäuse (31) befestigt ist, um mit dem Außengehäuse (31) translatorisch verbunden zu sein, wobei das elastische Element (80) um den vorstehenden Abschnitt (43) der Stange (40) herum angeordnet ist, wobei das elastische Element (80) mindestens ein elastisches Mittel (83) umfasst, das zwischen einer ersten Verstärkung (81) und einer zweiten Verstärkung (82) eingefügt ist,
wobei das erste Verbindungselement (10) reversibel an dem Außengehäuse (31) befestigt ist, um mit dem Außengehäuse (31) translatorisch verbunden zu sein, wobei die erste Verstärkung (81) reversibel an dem Außengehäuse (31) befestigt ist, um mit dem Außengehäuse (31) translatorisch verbunden zu sein, wobei die zweite Verstärkung (82) mit dem vorstehenden Abschnitt (43) translatorisch verbunden ist und das zweite elastische Element (80) reversibel an dem vorstehenden Abschnitt (43) befestigt ist;
**dadurch gekennzeichnet, dass** das Außengehäuse (31) abgedichtet ist, wobei das Hydraulikfluid nur in dem Hydrauliksystem enthalten ist, und dass das elastische Element (80) und das Hydrauliksystem (30) zwei getrennte Module sind.

2. Dämpfungsvorrichtung nach Anspruch 1,
**dadurch gekennzeichnet, dass** die Stange (40) den vorstehenden Abschnitt (43) umfasst, der longitudinal von einer ersten Seite (47) des Außengehäuses (31) vorsteht, dass die Dämpfungsvorrichtung (7) einen ersten geschlossenen Raum (101) umfasst, der von dem vorstehenden Abschnitt (43) durchquert wird und zwischen dem Außengehäuse (31) und dem elastischen Element (80) angeordnet ist, und dass in Abwesenheit von Leckage des Hydrauliksystems der erste Raum (101) hydraulisch von dem Hydrauliksystem isoliert ist.

3. Dämpfungsvorrichtung nach einem der Ansprüche 1 bis 2,
**dadurch gekennzeichnet, dass** die Dämpfungsvorrichtung (7) ein Überwachungssystem (150) zum Bewerten der Menge an Hydraulikflüssigkeit (100) im äußeren Gehäuse (31) umfasst.

4. Dämpfungsvorrichtung nach einem der Ansprüche 1 bis 3,
**dadurch gekennzeichnet, dass** die erste Verstärkung (81) sich radial erstreckende Rippen (88) trägt.

5. Dämpfungsvorrichtung nach einem der Ansprüche 1 bis 4,
**dadurch gekennzeichnet, dass** das Hydrauliksystem (30) einen Kolben (50) umfasst, der zwei Hydraulikkammern (35, 36) innerhalb eines in dem äußeren Gehäuse (31) angeordneten Innenraumes (34) longitudinal begrenzt.

6. Dämpfungsvorrichtung nach Anspruch 5,
**dadurch gekennzeichnet, dass** die Hydraulikkammern (35, 36) identische Abschnitte umfassen, wobei jeder Abschnitt einen Querschnitt einer Hydraulikkammer (35, 36) in einer Ebene (P1) senkrecht zur Längsachse (AX) darstellt.

7. Dämpfungsvorrichtung nach einem der Ansprüche 5 bis 6,
**dadurch gekennzeichnet, dass** die Hydraulikkammern (35, 36) hydraulisch mit zwei Rückschlagventilen (60), einem als "Kompressionsrückschlagventil (61)" bezeichneten Rückschlagventil und einem als "Traktionsrückschlagventil (62)" bezeichneten Rückschlagventil verbunden sind, die ab einer bestimmten Verschiebungsamplitude des Kolbens (50) das Hydraulikfluid von einer Hydraulikkammer (35, 36) zu der anderen Hydraulikkammer (36, 35) drosseln.

8. Dämpfungsvorrichtung nach einem der Ansprüche 5 bis 7,
**dadurch gekennzeichnet, dass** mindestens eine kalibrierte Öffnung (51) im Kolben (50) gebildet ist, um bei Bewegung des Kolbens (50) das Hydraulikfluid (100) von einer Hydraulikkammer (35, 36) in die andere Hydraulikkammer (36, 35) zu drosseln.

9. Dämpfungsvorrichtung nach einem der Ansprüche 5 bis 8,
**dadurch gekennzeichnet, dass** das Hydrauliksystem (30) eine Ausgleichskammer (70) in Beziehung zu den Hydraulikkammern (35, 36) umfasst, wobei die Ausgleichskammer (70) durch einen translatierbaren Verschluss (71) begrenzt ist, der mit einem elastischen System (72) zusammenwirkt.

10. Dämpfungsvorrichtung nach Anspruch 9,
**dadurch gekennzeichnet, dass** die Ausgleichskammer (70) und der Verschluss (71) innerhalb der Stange (40) untergebracht sind, wobei jede Hydraulikkammer (35, 36) in Fluidverbindung mit einem Ausgleichsvolumen (73) durch eine in der Stange (40) vorgesehene Durchgangsöffnung (46) steht, wobei das Ausgleichsvolumen (73) durch den Verschluss (71) von der Ausgleichskammer (70) getrennt ist.

11. Dämpfungsvorrichtung nach Anspruch 9,
**dadurch gekennzeichnet, dass** die Ausgleichskammer (70) und der Verschluss (71) in einem Abschnitt (74) des äußeren Gehäuses (31) untergebracht sind, der in einem inneren Hohlraum (14) des ersten Verbindungselements (10) angeordnet ist.

12. Dämpfungsvorrichtung nach einem der Ansprüche 1 bis 11,
**dadurch gekennzeichnet, dass** das elastische Mittel (83) mindestens eine Feder (85) umfasst.

13. Dämpfungsvorrichtung nach einem der Ansprüche 1 bis 12,
**dadurch gekennzeichnet, dass** das elastische Mittel (83) mindestens einen Ring (84) aufweist, der mit einem elastischen Material aus der Gruppe der Elastomere versehen ist.

14. Dämpfungsvorrichtung nach einem der Ansprüche 1 bis 13,
**dadurch gekennzeichnet, dass** die zweite Verstärkung (82) einen radialen Vorsprung (87) aufweist, der in Längsrichtung zwischen einem Längsanschlag (49) der Stange (40) und einem Längsende (89) des zweiten Verbindungselements (20) eingespannt ist.

15. Dämpfungsvorrichtung nach Anspruch 14,
**dadurch gekennzeichnet, dass** ein drehbewegliches Element zwischen dem radialen Vorsprung (87) und der Stange (40) angeordnet ist, um eine Drehung der Stange (40) relativ zu dem elastischen Element (80) um die Längsachse (AX) zu ermöglichen.

16. Dämpfungsvorrichtung nach einem der Ansprüche 1 bis 15,
**dadurch gekennzeichnet, dass** das zweite Verbindungselement (20) eine Mutter (25) aufweist, die mit der Stange (40) verschraubt ist.

17. Dämpfungsvorrichtung nach einem der Ansprüche 1 bis 16,
**dadurch gekennzeichnet, dass** das zweite Verbindungselement (20) ein Gewinde (26) aufweist, das mit einem Gewinde (91) des vorstehenden Teils (43) verschraubt ist, wobei die Stange (40) eine Dreharretieröffnung (45) aufweist, die geeignet ist, mit einem Werkzeug zusammenzuwirken, um die Stange (40) in Drehung um die Längsachse (AX) zu arretieren.

18. Luftfahrzeug(1),
**dadurch gekennzeichnet, dass** das Luftfahrzeug (1) mindestens eine Dämpfungsvorrichtung (7) nach einem der Ansprüche 1 bis 17 aufweist.

## Claims

1. Damping device (7) provided with a first connecting member (10) and a second connecting member (20) which are capable of connecting said damping device (7) to a first mechanical member (5) and a second mechanical member (6), respectively, said damping device (7) comprising a resilient member (80) and a hydraulic system (30) which are positioned between the first connecting member (10) and the second connecting member (20), said hydraulic system (30) comprising an outer casing (31) containing a hydraulic fluid (100), said hydraulic system (30) comprising a rod (40) which can be translated relative to said outer casing (31), said rod (40) extending longitudinally from a first end (41) to a second end (42) along a longitudinal axis (AX), said rod (40) having a projecting part (43) that projects longitudinally from said outer casing (31), said first connecting member (10) being reversibly fastened to the outer casing (31) so as to be constrained to move in translation with the outer casing (31), said resilient member (80) being arranged around said projecting part (43) of the rod (40), said resilient member (80) comprising at least one resilient means (83) positioned between a first reinforcement (81) and a second reinforcement (82), said first connecting member (10) being reversibly fastened to the outer casing (31) so as to be constrained to move in translation with the outer casing (31), the first reinforcement (81) being reversibly fastened to said outer casing (31) so as to be constrained to move in translation with the outer casing (31), the second reinforcement (82) being constrained to move in translation with said projecting part (43), said second resilient member (80) being reversibly fastened to said projecting part (43), **characterised in that** said outer casing (31) is sealed, said hydraulic fluid being contained only in said hydraulic system, and **in that** the resilient member (80) and the hydraulic system (30) are two separate modules.

2. Damping device according to claim 1, **characterised in that**, said rod (40) comprising said projecting part (43) that projects longitudinally from a first side (47) of the outer casing (31), said damping device (7) comprises a first closed space (101) through which the projecting part (43) passes and which is arranged between the outer casing (31) and the resilient member (80), said first space (101) being hydraulically isolated from said hydraulic system in the absence of leakage from the hydraulic system.

3. Damping device according to either claim 1 or claim 2, **characterised in that** said damping device (7) comprises a monitoring system (150) for evaluating the amount of hydraulic fluid (100) present in the outer casing (31).

4. Damping device according to any of claims 1 to 3, **characterised in that** said first reinforcement (81) has wings (88) that extend radially.

5. Damping device according to any of claims 1 to 4, **characterised in that** said hydraulic system (30) comprises a piston (50) which longitudinally defines two hydraulic chambers (35, 36) within an internal space (34) arranged in the outer casing (31).

6. Damping device according to claim 5, **characterised in that** said hydraulic chambers (35, 36) comprise identical sections, each section representing a cross section of a hydraulic chamber (35, 36) in a plane (P1) perpendicular to the longitudinal axis (AX).

7. Damping device according to either claim 5 or claim 6, **characterised in that** said hydraulic chambers (35, 36) hydraulically communicate with two limiter valves (60), one limiter valve being referred to as the "compression limiter valve (61)" and one limiter valve being referred to as the "traction limiter valve (62)", which valves restrict the flow of said hydraulic fluid from one hydraulic chamber (35, 36) to the other hydraulic chamber (36, 35) from a determined amplitude of movement of the piston (50).

8. Damping device according to any of claims 5 to 7, **characterised in that** at least one calibrated opening (51) is made in the piston (50) for restricting the flow of the hydraulic fluid (100) from one hydraulic chamber (35, 36) to the other hydraulic chamber (36, 35) as the piston (50) moves.

9. Damping device according to any of claims 5 to 8, **characterised in that** said hydraulic system (30) comprises a compensation chamber (70) associated with said hydraulic chambers (35, 36), the compensation chamber (70) being delimited by a translatable plug (71) which engages with a resilient system (72).

10. Damping device according to claim 9, **characterised in that** said compensation chamber (70) and said plug (71) are housed within said rod (40), each hydraulic chamber (35, 36) being in fluid communication with a compensation space (73) via a through-opening (46) made in said rod (40), the compensation space (73) being separated from the compensation chamber (70) by the plug (71).

11. Damping device according to claim 9, **characterised in that** said compensation chamber (70) and said plug (71) are housed in a portion (74) of the outer casing (31) arranged in an internal recess (14) in the first connecting member (10).

12. Damping device according to any of claims 1 to 11, **characterised in that** said resilient means (83) comprises at least one spring (85).

13. Damping device according to any of claims 1 to 12, **characterised in that** said resilient means (83) comprises at least one ring (84) provided with a resilient material from the group comprising elastomers.

14. Damping device according to any of claims 1 to 13, **characterised in that** said second reinforcement (82) comprises a radial projection (87) which is wedged longitudinally between a longitudinal stop (49) of said rod (40) and a longitudinal end (89) of said second connecting member (20).

15. Damping device according to claim 14, **characterised in that** a rotatable member is arranged between said radial projection (87) and said rod (40) to allow the rod (40) to rotate relative to said resilient member (80) about said longitudinal axis (AX).

16. Damping device according to any of claims 1 to 15, **characterised in that** said second connecting member (20) comprises a nut (25) screwed onto said rod (40).

17. Damping device according to any of claims 1 to 16, **characterised in that** said second connecting member (20) comprises a thread (26) screwed onto a thread (91) of said projecting part (43), said rod (40) having an opening (45) for preventing rotation that is capable of engaging with a tool so as to prevent said rod (40) from rotating about said longitudinal axis (AX).

18. Aircraft (1), **characterised in that** said aircraft (1) comprises at least one damping device (7) according to any of claims 1 to 17.
